# EUROPEAN PATENT APPLICATION

(11) **EP 4 167 338 A1**
(43) Date of publication of application: **19.04.2023**
(21) Application number: 21820992.2
(22) Date of filing: 09.06.2021
(51) Int. Cl.: H01M 10/058, H01M 10/38

(54) **LITHIUM-ION BATTERY AND PREPARATION METHOD THEREFOR**

(30) Priority: 10.06.2020 CN 202010522660
(71) Applicant: Hefei Gotion High-Tech Power Energy Co., Ltd., Hefei, Anhui 230012 (CN)
(72) Inventor: XU, Xingwu, Hefei, Anhui 230012 (CN); SHEN, Yongkuan, Hefei, Anhui 230012 (CN); JU, Linrun, Hefei, Anhui 230012 (CN); ZHUANG, Huajie, Hefei, Anhui 230012 (CN); LIN, Shaoxiong, Hefei, Anhui 230012 (CN); LU, Hengfei, Hefei, Anhui 230012 (CN); LU, Fang, Hefei, Anhui 230012 (CN)
(74) Representative: Patentanwälte Olbricht Buchhold Keulertz
(86) International application number: PCT/CN2021/099049
(87) International publication number: WO 2021/249415

(57) **Abstract**

Provided are a lithium-ion battery and a preparation method therefor. The preparation method comprises the steps of connecting a plurality of cells in series and/or in parallel and then packaging same to obtain a module, with the cells being stacked cells or rolled cells. According to the preparation method, the process is simple, and a battery cell shell and a module shell are combined into a whole, thereby greatly reducing the cost. Moreover, in the design of battery, the battery is internally provided with a heating sheet of graphene, etc., so as to overcome the low-temperature bottleneck of the lithium-ion battery. The standardized battery directly achieves integrated manufacturing from rolled cells into a module, has the characteristics of a low cost, a high specific energy, a wide temperature range, high safety and a long service life, and omits the post-manufacturing procedure for the module so as to reduce the production cost.

## Description

### Technical Field

The present invention relates to a method for preparing a lithium-ion secondary battery, especially to a method for preparing a lithium-ion secondary battery module in which the module is prepared directly from jelly rolls or stacks to module, belonging to the technical field of battery manufacturing.

### Background Art

Lead-acid batteries have a history about 140 years which is longer than that of lithium-ion secondary batteries, and have been holding a large market share due to their advantages such as low cost, great safety, reliability, and wide operation temperature range. However, the disadvantages of lead-acid batteries are also obvious, such as low energy density, short life, and pollution issues in the manufacturing process etc. These disadvantages become huge obstacle to the development of lead-acid batteries.

Over the recent decades, due to the rapid development of electric vehicles around the world, lithium-ion batteries achieved a significant breakthrough in enhancing energy density and reducing cost. Currently, for LFP batteries (lithium iron phosphate), the energy density exceed 200 Wh/kg and the cost is close to that of lead-acid batteries. Therefore, the competitiveness in terms of both the performance-cost ratio and absolute price of LFP batteries become stronger.

Vehicle electrification is now a worldwide trend. The main factors limiting vehicle electrification are the insufficient energy density of their core component (power batteries) and the cost that cannot meet the requirement of marke. In the field of electric vehicle batteries, there are mainly two technical routes: NCM batteries (also known as ternary batteries) and LFP batteries. For NCM batteries, the safety issue is still unresolved, and the cost still remains high. While for LFP batteries, they have three main advantages: great safety, long life, and low cost. But, their use is limited by low energy density. In recent years, the energy density of lithium iron phosphate batteries has been greatly improved, which has reached 200 Wh/kg. But the cost is still not low enough to meet the requirement of the market.

At present, the manufacturing process for lithium-ion batteries includes two parts, i.e. cell manufacturing and module manufacturing, wherein the cell manufacturing comprises slurry mixing - coating - calendering - slitting - winding(lamination) - assembly - laser welding and sealing - formation - capacity grading, and the module manufacturing comprises cell matching - cell encasing - electric terminal tab busbar welding - low voltage wire welding - module cover plate welding and fixing. The above processes includes both the cell manufacturing procedure and the module manufacturing procedure. The module structure include both cell case and module case. Cell case is usually made of metal or aluminum-plastic film, and the cost of case accounts for a large fraction.

Patent Document CN110518174A provides a battery and a battery module. This battery adopts the technique of internal cell series in the module, one-stop injection process, and one-stop formation in series. However, its overall cost is still high as the batteries require cell package material and metal module case. Moreover, this product is only applicable to a limited variety of electric vehicle battery packs and cannot be widely used in a market of lead-acid batteries.

### Summary of the Invention

In order to solve these technical problems mentioned above, an objective of the present invention is to provide a lithium-ion secondary battery with low cost, high energy density, and good cycle life.

Another objective of the present invention is to provide a method for preparing the lithium-ion secondary battery mentioned above in serial standard sizes.

In order to achieve any of the above objectives, the present invention firstly provides a method for preparing a lithium-ion secondary battery, comprising a step of obtaining a module by packaging a plurality of cells connected in series and/or in parallel, wherein the cells are stacking-rolls or jelly-rolls.

The method for preparing a lithium-ion secondary battery according to the present invention combines the manufacturing processes for lithium-ion batteries and lead-acid batteries, and realizes direct preparation of a module from jelly-rolls (or stacking-rolls) to module (e.g. Jelly-roll To Module: JTM).

In a specific embodiment of the present invention, the method specifically comprises the following steps:
preparing cathode and anode electrode slurries: preparing cathode and anode slurries from cathode and anode active materials;
coating: coating cathode and anode electrode current collectors with the cathode and anode slurries;
slitting: slitting the coated cathode and anode electrode current collectors to obtain electrode sheets;
cutting: cutting the electrode sheets to make electrode tabs, so that the electrode sheets have protruding electrode tabs;
lamination or winding: lamination or winding the cathode, anode electrode sheets and separator to obtain cells in stacking-rolls or jelly-rolls;
placing cells in unit compartments: placing the obtained stacks or jelly rolls in unit compartments which act as physically separate between individual cells;
   and
then connecting these cells in series and/or in parallel to form a module and sealing the module to obtain a lithium-ion secondary battery.

The method for preparing a lithium-ion secondary battery according to the present invention comprises a step of preparing cathode and anode electrode slurries. This step is a process of obtaining cathode and anode electrode slurries from cathode and anode electrode active materials.

In preparation of the cathode and anode electrode slurries, the cathode electrode active material may be conventional lithium-ion battery cathode electrode material and the anode electrode material may be a conventional lithium-ion battery negative electrode material. In a specific embodiment of the present invention, for preparation of the cathode electrode slurry, the cathode electrode material may be one or mixture of several from the group consisting of lithium iron phosphate (LFP), ternary positive electrode material NCM, lithium cobaltate LCO, ternary positive electrode material NCA, lithium manganate LMO, and quaternary cathode electrode material ; preferably LFP which has great safety, long life, relatively high energy density, and low cost.

In a specific embodiment of the present invention, for preparation of the anode electrode slurry, the anode electrode material may be one or mixture of several from the group consisting of graphite, siliconcontaining anode electrode material, and metallic lithiuml; and specifically, the anode electrode material may be one or a combination of more selected from the group consisting of graphite, silicon monoxide, nanoscale silicon, lithium titanate, and metallic lithium.

In a specific embodiment of the present invention, preparation of the cathode and anode electrode slurry can be carried out by a dry or wet method pro.

In a specific embodiment of the present invention, the slurry can be a conventional slurry for lithium-ion batteries in the art. For example, water or an organic solvent (like N-methylpyrrolidone) is used as the solvent, and cathode and anode electrode materials, a conductive agent, and a binder are added to the solvent.

Specifically, the slurry may be:
a cathode electrode slurry: 90% to 99% of a cathode electrode material (e.g. lithium iron phosphate), 0% to 3% of a conductive agent (the lower limit is not 0), 0% to 2% of a binder (the lower limit is not 0, such as PVDF), with the total content of the cathode electrode material, the binder, and the conductive agent being 100% by mass; wherein NMP is used as the solvent, and the solid content of the cathode electrode slurry is 40% to 90%; or
an anode electrode slurry: 95% to 99% of an anode electrode material (e.g. graphite), 0% to 3% of a conductive agent (the lower limit is not 0), 0% to 5% of a binder (the lower limit is not 0, e.g. CMC+SBR), with the total content of the anode electrode material, the binder, and the conductive agent being 100% by mass; wherein water is used as the solvent, and the solid content of the anode electrode slurry is 30% to 90%.

In a preferred embodiment of the present invention, the slurry uses an electrolyte solution as the solvent and no binder is added. In this case, the electrolyte solution may be a conventional electrolyte solution in the art, and the binding performance of the slurry is not affected by the absence of a binder. For example, when an electrolyte solution is used as the solvent of the slurry, the slurry may be:
a cathode electrode slurry: 90% to 99% of a cathode electrode material (e.g. lithium iron phosphate), and 1% to 10% of a conductive agent (e.g. graphene and carbon tubes), with the total content of the cathode electrode material and the conductive agent being 100% by mass; wherein no binder is added, and an electrolyte solution is used as the solvent and may be a conventional electrolyte solution in the art, for example, an electrolyte solution comprising LiPF₆ as a lithium salt at a concentration of 0.8 mol/L to 1.2 mol/L in EC:EMC:DMC = 25:50:25; and wherein the solid content of the cathode electrode slurry is 50% to 95%; or
an anode electrode slurry: 92% to 99% of an anode electrode material (e.g. graphite), and 1% to 8% of a conductive agent (e.g. carbon black), with the total content of the anode electrode material and the conductive agent being 100% by mass; wherein no binder is added, and an electrolyte solution is used as the solvent and may be a conventional electrolyte solution in the art, for example, an electrolyte solution comprising LiPF₆ as a lithium salt at a concentration of 0.8 mol/L to 1.2 mol/L in EC:EMC:DMC = 25:50:25; and wherein the solid content of the anode electrode slurry is 40% to 95%.

In a preferred embodiment of the present invention, the material cost is saved by changing the solvent of the mixture slurry, the solid content and viscosity of the slurry is increased, and an electrode sheet with a surface density of 100 g/m² to 1500 g/m² can be prepared.

The method for preparing a lithium-ion secondary battery according to the present invention comprises a step of coating. The step of coating is to coat the cathode and anode slurries to the cathode and anode electrode current collectors.

In a specific embodiment of the present invention, the cathode and anode electrode slurries may be coated to the cathode and anode electrode current collectors by a extrusion or contact coating method.

When the cathode and anode electrode slurries are coated, a single or multi-layer metal mesh or foil can be used, or a three-dimensional plate lattice manufactured by casting or etching process can be used as the current collector. Furthermore, the metal foil may be porous or mesh-like to further reduce the weight of the foil. For example, an aluminum foil may be used as the current collector for the cathode electrode, and a copper foil may be used as the current collector for the anode electrode.

In a specific embodiment of the present invention, a mesh-like plate lattice current collector is used, with a thickness of 3 µm to 500 µm for the cathode electrode and 3 µm to 500 µm for the anode electrode; and the shape of the mesh in the plate lattice may be triangular, square, rectangular, polygonal, or the like.

In another specific embodiment of the present invention, an aluminum foil with a thickness of 5 µm to 25 µm is used as the cathode electrode current collector, and a copper foil with a thickness of 3 µm to 25 µm is used as the anode electrode current collector. The coated area density is controlled at 100 g/m² to 600 g/m² for the cathode electrode and 50 g/m² to 300 g/m² for the anode electrode; the coating speed is controlled at 20 m/s to 150 m/s, and the drying temperature is 70 □ to 140 □.

The method for preparing a lithium-ion secondary battery according to the present invention may also comprise a step of calendering. Different subsequent processes are selected depending on the slurry. When an electrolyte solution is used as the solvent for the slurry, the steps of drying and calendering are not required after coating, thereby shortening the manufacturing period and reducing the manufacturing cost. When water or an organic solvent is used as the solvent for the slurry, according to the conventional coating method, drying is carried out after coating and a subsequent calendering step is required.

In a specific embodiment of the present invention, the calendering controls the compacted density. For example, the compacted density of the cathode electrode is 1.5 to 3.7 (preferably 1.5 to 3.1 or 2.0 to 3.7, more preferably 2.0 to 3.1), the compacted density of the anode electrode is 1.0 to 1.8 (preferably 1.4 to 1.8), and the calendering temperature is controlled at 20°C to 90°C.

The method for preparing a lithium-ion secondary battery according to the present invention comprises a step of slitting. The step of slitting is required for both the above-mentioned slurries. The slitting is to slit the coated cathode and anode current collectors to obtain electrode sheets.

In a specific embodiment of the present invention, the width of slit electrode sheets is selected according to the size of the cell, and is generally 10 mm to 1000 mm, preferably 60 mm to 1000 mm.

The method for preparing a lithium-ion secondary battery according to the present invention comprises a step of cutting. The purpose of cutting is to cut out the shape of an electrode tab on the electrode sheet, so that the electrode sheet has a protruding electrode tab after winding or lamination.

The method for preparing a lithium-ion secondary battery according to the present invention comprises a step of lamination or winding. The cathode and anode electrode sheets are stacked or wound by a lamination process or a winding process to obtain a stack or a jelly roll.

In a specific embodiment of the present invention, the number of layers of cathode and anode electrodes of a cell is selected according to the area density of the coated cathode and anode electrodes, and the specific number of layers is adapted to the thickness of the cell and the size of the unit compartment.

In a specific embodiment of the present invention, the separator used in the lamination or winding process may be a conventional separator for lithium-ion batteries. In this case, the thickness of the separator may be 3 µm to 100 µm; and the thickness of the cell may be 93% to 98% of the thickness of the inner cavity of a unit compartment.

In a specific embodiment of the present invention, the lamination may be carried out using a conventional lamination process in the art, for example, by lamination for a pouch cell. The winding may be carried out using a conventional winding process in the art, and may produce a rectangular jelly roll or a cylindrical jelly roll, for example, by means of winding for a prismatic lithium-ion secondary battery.

The method for preparing a lithium-ion secondary battery according to the present invention comprises a step of placing cells in unit compartments. The prepared stacks or jelly rolls are placed in unit compartments to act as physically separate between individual cells.

In a specific embodiment of the present invention, cells can be placed in the unit compartments by an assisting tool or an automated device or manually.

In a specific embodiment of the present invention, formed or unformed cells may be directly placed in the unit compartments in a bare state, or may be placed in the unit compartments after being sealed in a heat shrinkage film and flattened. In this case, the cells may be wrapped with a heat shrinkage film by sealing process used in pouch cell, and then subjected to injection, formation, degassing, fine sealing, and edge cutting. Specifically, the heat shrinkage film can be one or a combination of more selected from the group consisting of an aluminum plastic film, PP, PET, CPP, and the like.

The method for preparing a lithium-ion secondary battery according to the present invention may comprise a step of welding. Connector are welded for cathode or anode electrodes of a plurality of cells. In the method according to the present invention, the connector may be welded before the steps of sealing and capacity grading. In a conventional process, individual cells are produced after sealing and capacity grading, and then connected by a busbar to form a series-type battery module. Different from the conventional method, the present invention can directly replace the busbar with a connector, and may weld the connector for the cathode or anode electrodes before sealing and capacity grading, thus simplifying the module process.

In a specific embodiment of the present invention, the cells may be directly connected in series and/or in parallel. For example, the battery case has two terminals for the cathode and anode electrodes. At the cathode terminal of the battery case, the anode electrode of the outer cell and the cathode electrode of the inner adjacent cell are connected in series by welding, and at the anode terminal of the battery case, the cathode electrode of the outer cell and the anode electrode of the inner adjacent cell are connected in series by welding. The two unconnected cathode and anode electrodes of the cells in the middle are connected in series by welding, and the cathode and anode electrodes of the outer cells in the battery case are connected to cathode and anode electrode connectors, respectively.

In a specific embodiment of the present invention, a plastic-metal composite connection plate can be used as the connector for cathode or anode electrodes, to be welded to the cathode or anode electrode tabs of the stacks or jelly rolls.

In a specific embodiment of the present invention, the welding may be cast welding after the cells are inverted, and the cast welding solder is molten metal, preferably molten tin metal.

The method for preparing a lithium-ion secondary battery according to the present invention may comprise a step of connecting signal wires.

The signal wires are welded to the cathode terminal, the anode terminal, and the series connecting points of the battery case, and the connected signal wires allow real-time monitoring of the voltage and temperature of the cell units.

The method for preparing a lithium-ion secondary battery according to the present invention may also comprise a step of electrolyte solution injecting after the signal wires are connected and before the module is sealed.

In a specific embodiment of the present invention, electrolyte-soaked cells can be placed directly in the unit compartments. Alternatively, electrolyte-soaked and formed cells can be packaged with a heat shrinkage film and then placed in the unit compartments. This may eliminate electrolyte solution injecting into the unit compartments.

By changing the way of welding and injection after the cells are placed in the unit compartments, the present invention reduces the investment in welding equipment, and simplifies the design of the cover plate. The standardized internal stack of cells connected in series eliminates the module manufacturing process and further reduces the manufacturing cost.

The method for preparing a lithium-ion secondary battery according to the present invention may comprise a step of module sealing.

In a specific embodiment of the present invention, the cover plate of the battery case and the housing of the battery case are sealed with a sealant. Preferably, holes are reserved in the cover plate for the cathode and anode electrode connectors to connect in external circuits, and the holes can be sealed with a sealant.

The cover of battery according to the present invention is sealed by an ultrasonic melt welding method or a laser welding method. The connectors and terminals on the battery case need to be sealed.

By changing the way of welding and injection after the cells are placed in the case, the present invention reduces the investment in welding equipment, and simplifies the design of the cover plate. The standardized internal stack of cells connected in series eliminates the module manufacturing process and further reduces the manufacturing cost.

The method for preparing a lithium-ion secondary battery according to the present invention may also comprise a step of formation. The formation of cells can be carried out before the cells are loaded in the unit compartments; or a module can be produced first and then subjected to formation in series.

In a specific embodiment of the present invention, when the cells are subjected to formation, the individual cells are connected in series and then subjected to formation as a whole in series, or the cells can be individually subjected to formation.

The method for preparing a lithium-ion secondary battery according to the present invention may also comprise a step of capacity grading. Capacity grading can be carried out after the module sealing. If the module is subjected to formation, capacity grading can be carried out after the formation. Capacity grading can be done by performing capacity tests in a series process.

The present invention also provides a lithium-ion secondary battery, which is prepared by the above method for preparing a lithium-ion secondary battery according to the present invention, and the lithium-ion secondary battery comprises:
a plurality of cells, each being a jelly roll, a stacking roll, or a pouch cell; wherein each cell has a cathode electrode tab and an anode electrode tab at one end, the cathode electrode tabs and the anode electrode tabs of the plurality of cells are connected via connector so that the cells are connected in series and/or in parallel, and a total cathode terminal of the module and a total anode terminal of the module are formed;
a plurality of separated components, each components for accommodating a single cell, the separated components physically separating individual cells and having an open structure on the upper side; and
a housing and a cover plate, which, when assembled together, form an internal space for accommodating the plurality of separated components and the cells in the separated components, wherein the cover plate provides a connection part for the total cathode terminal of the module and a connection part for the total anode terminal of the module.

In a specific embodiment of the present invention, the separated component is a unit shell, a partitioning film, or a partitioning plate. The partitioning plate is a partitioned structure formed by integrated molding with the housing. It can also be directly made into a structure similar to the structure of a lead-acid battery case, wherein multiple partitioning plates are directly molded within a housing to form multiple chambers (unit compartments) to achieve an integrated structure of the housing and the partitioning plates. The number of unit compartments formed by the separated components may be adjusted according to the actual voltage, and may be one or more.

According to actual needs, a heating sheet or a liquid cooling plate may be further provided to achieve higher efficiency in cooperation with an external module thermal management system, and may be provided in the middle of each unit shell, or placed in the lower part of the entire module, to exert the effect of heating or heat dissipating, respectively.

In another specific embodiment of the present invention, the heating sheet may be a metal sheet, graphene, or a PTC sheet. Due to the built-in heating sheet, the lithium-ion battery module can work in an extremely low temperature environment, overcoming the disadvantage of weak performance in low temperature.

In a specific embodiment of the present invention, the energy density of lithium-ion secondary battery increases about 15%, and volume utilization increases 10% or more, impedance decreases about 10%, manufacturing period shortened, cost decreases about 20%, and the cycle performance at room temperature increase about 20%, compared with conventional lithium-ion batteries.

The lithium-ion secondary battery according to the present invention can be designed to have a pluggable battery case in a size half or the same as the size of a lead-acid battery case, or in other sizes and shapes. The voltage and power of the lithium-ion secondary battery according to the present invention may be comparable with that of a standard lead-acid battery, which is generally 12V·20Ah, but the size (91 mm×76 mm×165 mm) may be only half the size of a standard battery.

The standard size lithium-ion secondary battery according to the present invention can be applied not only in the field of electric vehicles, but also widely to electric bicycles, tricycles, UPS power supply, stop-start battery, 48V weak hybrid or dual voltage systems, and the like.

The above method for preparing a lithium-ion secondary battery according to the present invention can significantly reduce the cost of a lithium-ion secondary battery to the level of a lead-acid battery; and can realize the characteristics of a high energy density, a long life and great safety by using lithium iron phosphate. Due to the lamination process, the battery has an excellent power performance; and due to the built-in heating sheet, the battery can be used in an extremely low temperature environment, overcoming the disadvantage that lithium-ion batteries are difficult to use in cold areas.

The lithium-ion secondary battery according the present invention can be designed as a series of standard modules, which greatly facilitates standardization and versatility of the battery. Moreover, since it is a standardized battery, it has very great value and convenience for echelon use.

The method for preparing a lithium-ion secondary battery according to the present invention realizes the manufacturing of a module directly from jelly-rolls or stacking rolls, saves the manufacturing process of the module, for example, the steps of cell matching - cell assembling - electrode tab and busbar welding - signal wire welding - module case welding or fixing, reduces the production cost, and is meanwhile characterized by a high energy density, a wide temperature range, great safety, and a long life.

### Description of Drawings

FIG 1 is a schematic diagram of the structure of a lithium-ion secondary battery according to an embodiment of the present invention.
FIG 2 is a schematic diagram of the structure of another lithium-ion secondary battery according to an embodiment of the present invention.
FIG 3 is an external appearance of a lithium-ion secondary battery according to an embodiment of the present invention.
FIG 4 is a schematic diagram of the integrated unit compartments of a lithium-ion secondary battery according to an embodiment of the present invention.
FIG 5 is a charge-discharge curve of a lithium-ion secondary battery according to an embodiment of the present invention.
FIG 6 is a cycle performance curve of a lithium-ion secondary battery according to an embodiment of the present invention.

Main reference numbers in the drawings:
1. Injection-molded top cover; 2. Connection hole; 3. injection hole; 4. cathode electrode connector; 5. cathode electrode tab; 6. anode electrode connector; 7. anode electrode tab; 8. Unit shell; 9. Injection-molded housing; 10. Injection-molded cover plate; 11. Total cathode terminal of the module; 12. Total anode terminal of the module.

### Detailed Description of Invention

In order to provide a better understanding of the technical features, objectives and beneficial effects of the present invention, detailed descriptions of the technical solutions of the present invention are provided hereinafter, but are not to be understood as limiting the practicable scope of the present invention.

### Example 1

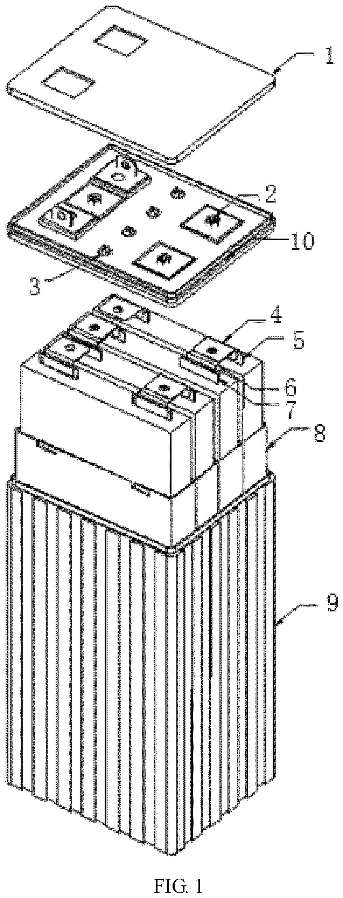

This example provides a lithium-ion secondary battery, as shown in FIG 1, comprising:
a plurality of cells, each cell being a jelly roll, a stack, or a pouch cell; wherein each cell has a cathode electrode tab 5 and an anode electrode tab 7 at one end, the cathode electrode tabs 5 and the anode electrode tabs 7 of the plurality of cells are connected via connector so that the cells are connected in series and/or in parallel, and a total cathode terminal of the module 11 and a total anode terminal of the module 12 are formed;
a plurality of unit shells 8, each for accommodating a single cell, the unit shells 8 physically separating individual cells and having an open structure on the upper side;
cathode electrode connector 4 as a conductive structure for connecting the cathode electrode tabs 5 of the cells;
anode electrode connector 6 as a conductive structure for connecting the anode electrode tabs 7 of the cells;
an injection-molded cover plate 10, as a structure for accommodating and fixing the cells, which forms, when assembled with the injection-molded housing, an internal space for accommodating the plurality of unit shells 8 and the cells therein, wherein a seal was formed between the injection-molded cover plate 10 and the open structure on the upper side of the unit shells 8, and the injection-molded cover plate 10 is provided with a connection part for the total cathode terminal of the module 11 and a connection part for the total anode terminal of the module 12;
an injection-molded housing 9, as the outermost shell having a protective and supporting function, for accommodating the plurality of unit shells 8; and
an injection-molded top cover 1, for covering the injection-molded cover plate 10 and packaging the housing.

Four jelly rolls are included. The jelly rolls were prepared from a plurality of small cells by a jelly-roll winding process. A cathode electrode tab 5 and an anode electrode tab 7 are provided at one end of a jelly roll. The cathode electrode tab 5 is connected to a cathode electrode connector 4, and the anode electrode tab 7 is connected to an anode electrode connector 6. The cathode electrode connector 4 and the anode electrode connector 6 may be in series and/or in parallel. For example, the anode electrode connector of a cell is connected to the cathode electrode connector of an adjacent cell, and the unconnected cathode electrode connector and the unconnected anode electrode connector serve as the connector for the total cathode electrode of the module and the total anode electrode of the module.

In this case, the cathode electrode connector 4 and the anode electrode connector 6 may be connected by bolts, and a connection hole can be provided in each of the cathode electrode connector 4 and the anode electrode connector 6 to allow a bolt or nut to pass through. Alternatively, the cathode electrode connector and the anode electrode connector can be connected by welding.

The jelly rolls may be replaced with stacks according to actual needs. A stack was prepared from a plurality small cells by a lamination process.

The four jelly rolls are placed respectively in four unit shells 8 that physically separate individual jelly rolls. The four jelly rolls are disposed in separate divisions to allow sealing, insulation, and blocking of ion transport channels for cells in series and/or in parallel. A unit shell 8 may be a single plastic shell, such as but not limited to a PET or PP hot melt sealing film, a PVC heat shrinkage film, or a PC, PP, or ABS-based injection-molded structure.

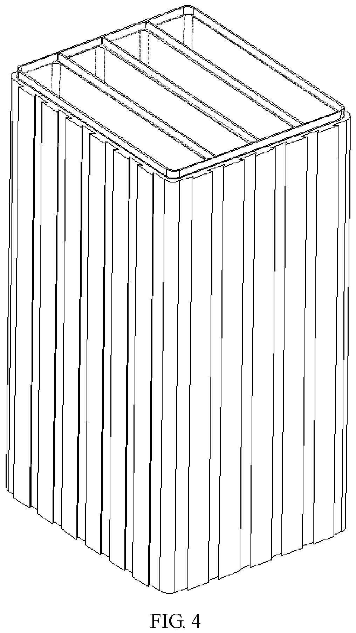

The separated component is preferably a partitioning plate, which may be a socket board directly inserted inside the injection-molded housing 9, dividing the inner cavity of the injection-molded housing 9 into a plurality of unit compartments. Alternatively, the partitioning plate is a partitioned structure formed by integrated molding with the housing, as shown in FIG 4. When the separated component is a partitioning plate, no additional shell is needed to package the cells, and the packaging process from small cells to a module can be completed with only one housing, which greatly simplifies the process and saves the cost.

An injection-molded cover plate 10 is included to form a seal with the upper-side open structure of the unit shells 8. Connection holes 2 are provided in the injection-molded cover plate 10, and are used to connect external signal wires and also to achieve a seal connection between the injection-molded cover plate 10 and the cathode electrode Connector 4 and the anode electrode Connector 6.

The injection-molded cover plate 10 is in a seal connection with the cathode electrode connector 4 and the anode electrode connector 6 at one end of a jelly roll. The connection may be achieved by bolting. For example, a bolt or nut can pass through the connection hole 2 and be connected to the cathode electrode connector 4 and the anode electrode connector 6, and is sealed by injection molding at the same time.

In addition, the injection-molded cover plate 10 and the injection-molded housing 9 match each other to form a sealed structure. ultrasonic melt welding or laser welding can be used to ensure the sealing of the entire housing as well as the sealing of individual chambers (unit shells 8). The injection-molded cover plate 10 was integratedly molded with the cathode electrode connector 4 and the anode electrode connector 6, thereby avoiding the need for post-assembly (for integrated injection molding of nuts for bolt connection, the bolting process requires additional intermediate fixing parts, such as cathode and anode electrode connector, signal wires, and the like, and therefore requires subsequent processing and assembly to complete the module).

Also injection holes 3 are provided in the injection-molded cover plate 10 for injecting liquid into the unit shell and degassing. An electrolyte solution may be injected according to actual needs. The number of injection holes 3 are the same as the number of unit shells, allowing separate contcalendering of the injection holes 3 and the corresponding unit shells 8. In addition, each injection hole 3 is equipped with a e injection hole sealing piece to achieve sealing of the module. After formation, the injection holes are sealed by the injection hole sealing piece, and the injection hole sealing piece is covered by the injection-molded cover plate 10. When the gas pressure inside the battery during use is too high, the injection hole sealing piece is flicked open to allow degassing through fine holes around the injection-molded cover plate, and after the degassing the injection hole sealing piece returns to its original state.

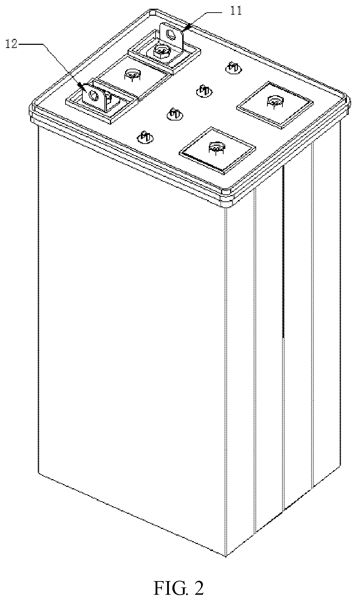

As shown in FIG 2, on the injection-molded cover plate 10, a connection part for the total cathode terminal of the module 11 and a connection part for the total anode terminal of the module 12 are provided as the cathode and anode conductive structures of the entire module, and are connected to the cathode electrode connection piece and the anode electrode connection piece by welding, respectively.

An injection-molded housing 9 and an injection-molded top cover 1 are included, wherein the injection-molded housing 9 is used to accommodate the plurality of unit shells 8, and the injection-molded top cover 1 overlies the injection-molded cover plate 10 and is provided with an outlet for the total cathode terminal of the module 11 and an outlet for the total anode terminal of the module 12. The injection-molded top cover 1 may also be used to package the injection-molded housing 9, in which case the injection-molded top cover 1 and injection-molded housing 9 may be fixed and packaged by injection of glue to ensure the sealing of the module.

The injection-molded cover plate 10, the injection-molded top cover 1, and the injection-molded housing 9 are packaged by using a sealant, which may be accompanied by sealing with ultrasonic melt welding or laser welding at the same time. Connection holes 2 and other connectors and terminals are sealed with a sealant.

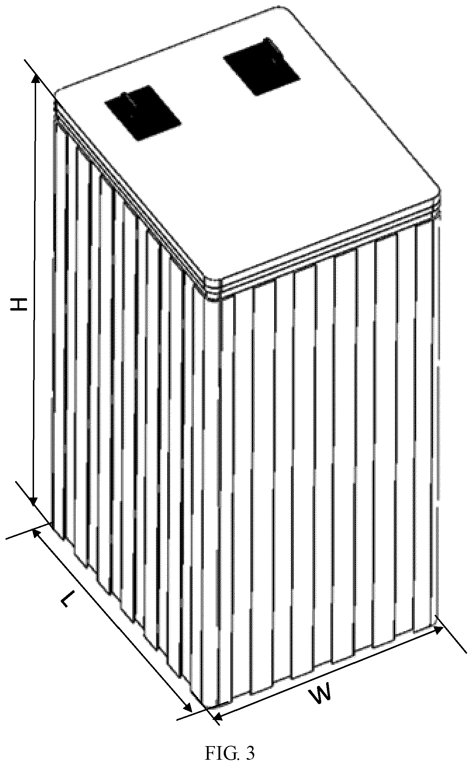

The battery shown in FIG 3 can be directly used as a lithium-ion battery, or two or more lithium-ion battery modules shown in FIG 3 may be assembled together to be used as a lithium-ion battery. Alternatively, one or more lithium-ion battery modules shown in FIG 3 can be assembled with other lithium-ion battery modules to be used as a lithium-ion battery.

This example also provides use of a 1/2 size lead-acid battery case with four chambers (unit shells 8) provided in the case, and the designed capacity of the stack was 20 Ah. Parts of this example that are not described in detail here were those commonly used in the art. The specific method for preparation is as follows.

Preparing slurries. The cathode electrode of the example used 90% to 99% of lithium iron phosphate, and 1% to 10% of graphene and carbon tubes as a conductive agent, without binder; the anode electrode material used 92% to 99% of graphite and 1% to 8% of carbon black, without binder. The cathode and anode electrode slurries were prepared with an electrolyte solution in which 0.8 mol/L LiPF₆ as the lithium salt was dissolved in EC:EMC:DMC=25:50:25. The solid content of the cathode electrode was 75% and the solid content of the anode electrode was 68%. As compared with a conventional process, the process for preparing slurries of this example did not use water or NMP as the solvent, thus saved the material cost, provided a high solid content and high viscosity of the slurries, and allowed preparation of electrode sheets with a area density of 100 to 1500 g/m², while conventional slurries having a low solid content cannot provide a coated electrode sheet having such a high area density. And there was no need for drying and injection after coating, so that the entire manufacturing period was shortened and the manufacturing cost was reduced.

Coating after preparation of slurries. Coating was performed with a double-layer pressing coater. The current collector used was a mesh-like plate lattice. The thickness of the cathode electrode current collector was 8 µm, and the thickness of the anode electrode current collector was 8 µm. The shape of the mesh openings in the plate lattice may be triangular, square, rectangle, polygonal, or the like. The coated electrode sheets did not need drying or calendering.

Slitting and cutting. The coated and rolled electrode sheet was slit into small rolls, which were further cut by laser cutting or die cutting to finish with cut out tabs.

lamination. The number of layers of cathode and anode electrodes of a unit cell was selected according to the area density of the coated cathode and anode electrodes, and the number of layers stacked in this example was adapted to the thickness of the stack and the size of the cell case. The separator used in this example was a conventional separator for lithium-ion batteries, and had a thickness of 8 µm. The outer surface of the stack unit was wrapped with a heat shrinkage film. The cathode and anode electrodes of adjacent stacks were placed in opposite directions so that the cathode and anode electrodes of the four stacks were adjacent to each other.

Placing in shell and welding. The battery case had two terminals for the cathode and anode electrodes. At the cathode terminal of the battery case, the anode electrode of the outer stack and the cathode electrode of the inner adjacent stack were connected in series by welding, and at the anode terminal of the battery case, the cathode electrode of the outer stack and the anode electrode of the inner adjacent stack were connected in series by welding. The two unconnected cathode and anode electrodes of the stacks in the middle were connected in series by welding, and the cathode and anode electrodes of the outer stacks of the battery case were welded to cathode and anode electrode connectors, respectively. Preferably, the welding was cast welding after the cells were inverted, and the cast welding solder was molten metal, preferably molten tin metal. Signal wires were welded to the cathode terminal, the anode terminal, and the series connecting points of the battery case, and the connected signal wires allowed real-time monitoring of the voltage and temperature of the stacks. In this Example, the cover plate of the battery case and the body of the battery case were packaged with a sealant. Preferably, holes were reserved in the cover plate for the cathode and anode connectors to connect external circuits, and the holes can be sealed with a sealant.

Injection and formation. Liquid was injected via the four injection holes in the battery cover plate, and formation in series can be performed directly after assembly was completed, wherein the formation was performed by charging the stacks at a current of 0.01 to 0.5 C for 40 min to 5000 min to activate the stacks. After formation, the injection holes were closed by a rubber cap, and the rubber cap was covered by the cover plate. When the gas pressure inside the battery during use is too high, the cap is flicked open to allow degassing through fine holes around the cover plate, and after the degassing the cap returns to its original state.

Capacity grading. The welded and sealed battery was charged and discharged at a rate of 0.1 to 1 C to determine the battery capacity, and then the battery was adjusted to a SOC of 20% to 60%.

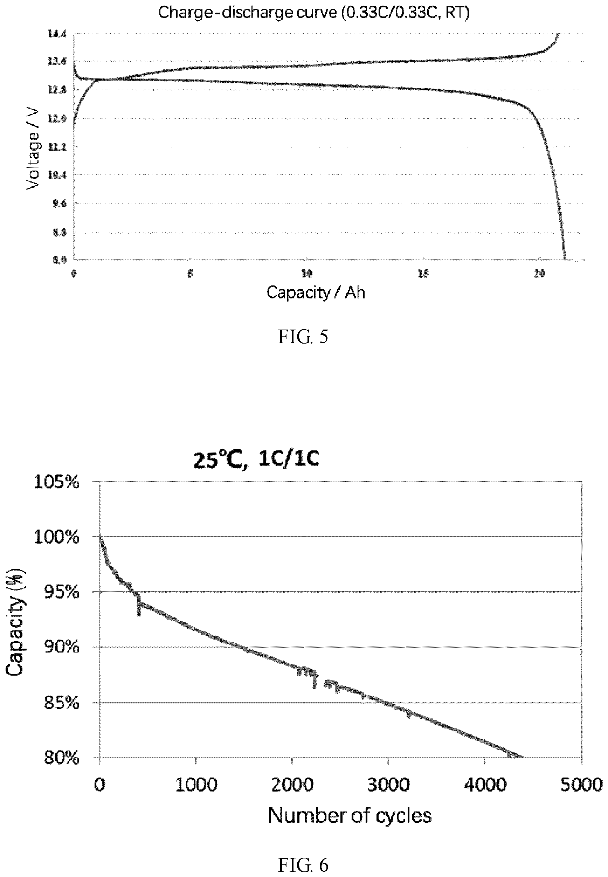

The lithium-ion secondary battery obtained in this example had a capacity at 0.33 C of 21.1 Ah, and the charge/discharge curve thereof is shown in FIG 5. The voltage range of a normal single cell was 2.0 to 3.65. This example produced a module with cells connected in series, and the voltage range can be 8.0 to 14.4.

FIG 6 shows the cycle performance of the battery of Example 1, and the number of cycles of the battery can reach 4000 at 25°C.

### Example 2

This example used a lead-acid battery case, with four unit compartments provided inside the case, and the designed capacity of the cell was 40 Ah. Parts of this example that are not described in detail here were those commonly used in the art.

Preparing slurries. The cathode electrode components were 98wt% of lithium iron phosphate, 1wt% of graphene, and 1wt% of PVDF, with NMP as a wetting agent, which were mixed by dry mixing or wet mixing. The solid content of the cathode electrode slurry was 65%. The anode electrode components were 96wt% of graphite, 1wt% of carbon black, and 3wt% of CMC+SBR, using deionized water for the slurry, which were mixed by dry mixing or wet mixing. The solid content of the anode electrode slurry was 60%.

Coating. The above mixed cathode and anode electrode slurries were applied to the cathode and anode current collectors by press or contact coating. The cathode electrode current collector was made of an aluminum foil with a thickness of 3 to 25 microns, and the anode electrode current collector was made of a copper foil with a thickness of 3 to 25 microns. The coated area density was controlled at 100 to 600 g/m² for the cathode electrode and 50 to 300 g/m² for the anode electrode; the coating speed was controlled at 20 to 150 m/s, and the drying temperature was 70 to 140 □. The residual amount of NMP and water after drying was measured and controlled within 600 ppm.

Calendering. The coated cathode electrode sheet and anode electrode sheet were rolled, and the compacted density of the cathode electrode was controlled at 1.5 to 23.1 g/m² and the compacted density of the anode electrode was controlled at 1.0 to 1.8 g/m².

Slitting and cutting. The coated and rolled electrode sheet was slit into small rolls, which were further cut by laser cutting or die cutting to finish with cut out tabs.

Winding. The electrode sheets after cutting were made into stacks by winding. The thickness of the stacks was controlled at 93% to 98% of the thickness of the inner cavity.

Formation and placing in shell. The stacks were welded to electrode tabs coated with a heat seal adhesive, and then wrapped with a layer of a packaging film made of PET which was heat sealed on three sides. An electrolyte solution was injected through the opening on the other side and then the opening was sealed. After 12 to 80 h of impregnation, the cells were subjected to formation by charging the stacks at a current of 0.01 to 0.5 C for 40 min to 5000 min to activate the stacks. The stacks after formation were degassed, heat sealed again, and cut. The stacks were placed in the battery case by hand or a semi-automatic tool to complete the assembly.

Welding and sealing. The tabs of the stacks placed in the shell were connected to the connectors on the cover plate by laser welding, and then a structural adhesive was applied to the position where the battery cover plate contacted the battery case, and was cured by heating to achieve the sealing of the entire cover plate and the battery case. At the same time, laser welding completed the serial connection inside the entire battery. The voltage and temperature sensing wiring harnesses were fixed to the battery terminals by welding for signal collection.

Capacity grading. The welded and sealed battery was charged and discharged at a rate of 0.1 to 1 C to determine the battery capacity, and then adjusted to a SOC of 20% to 60%.

The lithium-ion secondary battery obtained in this example had a capacity at 0.33 C of 41 Ah, and the cycle performance was comparable to that of Example 1.

By simplifying the parts and components through integrated manufacturing, the method according to the present invention provides a lithium iron phosphate battery module having an energy density of more than 190 Wh/kg, much higher than the 160 Wh/kg of a conventional lithium iron phosphate module and the 50 Wh/kg of a lead-acid battery, improves volume utilization by at least 10% as compared to that of a lithium battery module, reduces impedance by about 10% as compared to that of a conventional module due to fewer connected parts, and reduces cost by about 20% to a level similar to that of a lead-acid battery. At the same time, the integrated manufacturing ensures consistency of the module stacks, and enables as high as 4000 cycles at room temperature, much higher than that of lead-acid batteries, providing double advantages in terms of both performance and cost.

## Claims

1. A method for preparing a lithium-ion secondary battery, comprising a step of obtaining a module by packaging a plurality of cells connected in series and/or in parallel, wherein the cells are stacking-rolls or jelly-rolls.

2. The method according to claim 1, comprising the following steps:
preparing cathode and anode electrode slurries: preparing cathode and anode electrode slurries from cathode and anode electrode materials;
coating: coating cathode and anode electrode current collectors with the cathode and anode slurries, respectively;
slitting: slitting the coated cathode and anode electrode current collectors to obtain electrode sheets;
cutting: cutting the electrode sheets to make electrode tabs, so that the electrode sheets have protruding electrode tabs;
lamination or winding: lamination or winding the cathode and anode electrode sheets to obtain cells in stacking-rolls or jelly-rolls;
placing cells in unit compartments: placing the obtained stacks or jelly rolls in unit compartments which function to physically separate individual cells; and
then connecting a plurality of cells in series and/or in parallel to form a module and sealing the module to obtain a lithium-ion secondary battery.

3. The method according to claim 2, wherein the cathode and anode electrode slurries comprise water or an organic solvent as the solvent.

4. The method according to claim 2, wherein the cathode and anode electrode slurries comprise an electrolyte solution as the solvent and no binder is added to the slurries.

5. The method according to claim 3 or 4, wherein the cathode electrode material is a conventional lithium-ion battery cathode electrode material, and the anode electrode material is a conventional lithium-ion battery anode electrode material.

6. The method according to claim 5, wherein the cathode electrode material is one or a combination of more selected from the group consisting of lithium iron phosphate, NCM, lithium cobaltate, NCA, lithium manganate, and a quaternary cathode electrode material.

7. The method according to claim 5, wherein the anode electrode material is one or a combination of more selected from the group consisting of graphite, a silicon-containing anode electrode material, and metallic lithium.

8. The method according to claim 7, wherein the anode electrode material is one or a combination of more selected from the group consisting of graphite, siliconmonoxide, nanosacle silicon, and lithium titanate.

9. The method according to claim 1, further comprising a step of formation, wherein the cells are subjected to formation prior to module sealing, or the module is subjected to formation in series after module sealing.

10. The method according to claim 9, wherein for the formation of cells, the formation is performed on individual cells, or on cells connected in series.

11. The method according to claim 2, wherein formed or unformed cells are placed in the unit compartments in a bare state, or placed in the unit compartments after being packaged with a heat shrinkage film and flattened.

12. The method according to claim 3, further comprising a step of calendering after the coating.

13. A lithium-ion secondary battery prepared by the method according to any one of claims 1-12, the lithium-ion secondary battery comprising:
a plurality of cells, each being a jelly roll, a stacking roll, or a pouch cell; wherein each cell has a cathode electrode tab and an anode electrode tab at one end, the cathode electrode tabs and the anode electrode tabs of the plurality of cells are connected via connector so that the cells are connected in series and/or in parallel, and a total cathode terminal of the module and a total anode terminal of the module are formed;
a plurality of separated components, each components for accommodating a single cell, the separated components physically separating individual cells and having an open structure on the upper side; and
a housing and a cover plate, which, when assembled together, form an internal space for accommodating the plurality of separated components and the cells in the separated components, wherein the cover plate provides a connection part for the total cathode terminal of the module and a connection part for the total anode terminal of the module.

14. The lithium-ion secondary battery according to claim 13, wherein the separated component is a unit shell, a partitioning film, or a partitioning plate.

15. The lithium-ion secondary battery according to claim 13, wherein the energy density of lithium-ion secondary battery increases by 15%, volume utilization increases by 10% or more, impedance decreases by 10%, manufacturing period shortened, cost decreases by 20%, and cycle performance at room temperature increases by 20%, compared with conventional lithium-ion batteries.

16. The lithium-ion secondary battery according to claim 13, wherein the lithium-ion secondary battery is in a size the same as or half the size of a standard battery pack.
